# EUROPÄISCHE PATENTSCHRIFT

(11) **EP 1 121 581 B1**
(45) Veröffentlichungstag und Bekanntmachung des Hinweises auf die Patenterteilung: **15.02.2006**
(21) Anmeldenummer: 99947384.6
(22) Anmeldetag: 18.09.1999
(51) Int. Cl.: G01N 21/25, G02B 3/00, G02B 5/04

(54) **ABBILDUNGSSYSTEM MIT EINEM ZYLINDERLINSENARRAY**
IMAGING SYSTEM WITH A CYLINDRICAL LENS ARRAY
SYSTEME D'IMAGERIE COMPORTANT UN ENSEMBLE DE LENTILLES CYLINDRIQUES

(30) Priorität: 12.10.1998 DE 19846928
(43) Veröffentlichungstag der Anmeldung: 08.08.2001
(73) Patentinhaber: Carl Zeiss, 89518 Heidenheim (Brenz) (DE)
(72) Erfinder: VÖLCKER, Martin, D-89551 Königsbronn (DE); FATTINGER, Christof, CH-4070 Basel (CH)
(86) Internationale Anmeldenummer: PCT/EP1999/006925
(87) Internationale Veröffentlichungsnummer: WO 2000/022417

(56) Entgegenhaltungen:
- EP-A- 0 631 434
- WO-A-97/34171
- US-A- 5 808 784
- PATENT ABSTRACTS OF JAPAN vol. 1995, no. 04, 31. Mai 1995 (1995-05-31) -& JP 07 013101 A (MITSUBISHI RAYON CO LTD), 17. Januar 1995 (1995-01-17)
- PATENT ABSTRACTS OF JAPAN vol. 1997, no. 09, 30. September 1997 (1997-09-30) & JP 09 113858 A (FUJI PHOTO OPTICAL CO LTD), 2. Mai 1997 (1997-05-02)

## Beschreibung

Die Erfindung betrifft ein Abbildungssystem, insbesondere für einen Analyseautomaten mit einem hohen Probendurchsatz. Derartige Analyseautomaten werden häufig als "Reader" oder "Fluoreszenz-Reader" für Mikrotiterplatten bezeichnet. Eingesetzt werden derartige "Reader" beispielsweise in der pharmazeutischen Wirkstoffentwicklung oder der molekularmedizinischen Diagnose, also Anwendungen, bei denen Fluoreszenz, Lumineszenz und Absorptionsuntersuchungen von großen Probenzahlen bei kleinsten Probenmengen benötigt werden. Demzufolge ist bei diesen Anwendungen ein hoher Probendurchsatz von großer Bedeutung. Andererseits sind häufig Messungen der Reaktionskinetik erforderlich, deren Zeitkonstanten einem hohen Probendurchsatz im Wege stehen.

Als Probenbehältnisse werden bei diesen Anwendungen Mikrotiterplatten mit gerastert angeordneten Kleinstprobenbehältern in Standardausführungen mit z.B. 96 oder einem Vielfachen davon, beispielsweise 384 oder 1536 Probenbehältern eingesetzt. Alternativ sind auch sogenannte Substanzchips als Probenträger im Gebrauch.

Bei einigen Anwendungen besteht die eigentliche Meßaufgabe darin, den Anteil oder die zeitliche Veränderung des Anteils einer aus der Lösung in das Innere einer Zelle eingedrungenen oder auf der Zelloberfläche gebundenen Substanz zu bestimmen. Die betreffende Substanz ist dabei in der Regel durch einen fluoreszierenden Farbstoff markiert. Bei dieser Meßaufgabe ist es erforderlich, das Fluoreszenzsignal des von der Zelle aufgenommenen bzw. von der Zelle gebundenen Farbstoffes gegenüber dem Fluroeszenzsignal der sich noch in der Lösung befindlichen Substanz zu diskriminieren. Da die betreffenden Zellen in der Regel auf dem Boden der Mikrotiterplatte liegen, ist demzufolge ein Fluoreszenz-Reader erforderlich, der bodenselektiv arbeitet.

Ein entsprechender bodenselektiver Fluoreszenz-Reader wird beispielsweise von der Firma Molecular Devices Corporation, USA unter der Bezeichnung Fluorometric Imaging Plate Reader angeboten. Bei diesem Gerät erfolgt die Fluoreszenzanregung von unten durch den Boden der Mikrotiterplatte unter einem stark streifenden Einfall durch eine Schlitzmaske hindurch. Nachgewiesen wird dann das Fluoreszenzlicht aus demjenigen lateralen Bereich der Mikrotiterplatte, in dem das Anregungslicht aufgrund des streifenden Einfalls nur bis zu einer geringen Tiefe in das Probenbehältnis eingedrungen ist. Bei diesem Gerät ist jedoch die Fluoreszenzanregung sehr ineffektiv, da nur ein geringer Anteil der angeregten Fluoreszenz für den Nachweis ausgenutzt wird. Außerdem wird nur die Fluoreszenz eines sehr kleinen lateralen Bereiches des Probenraumbodens ausgenutzt, so daß nur die in diesem kleinen lateralen Bereich liegenden Zellen zum Meßsignal beitragen.

In der DE 197 48 211 A1 der Anmelderin ist ein optisches System für ein entsprechendes Analysegerät beschrieben, bei dem probenraumseitig ein Linsenarray mit einer jedem Probenbehälter zugeordneten Linse vorgesehen ist. Zusammen mit einem dem Linsenarray detektorseitig nachgeschalteten Teleskop mit Feldlinse werden die Foki der Einzellinsen des Linsenarrays auf ein Detektorarray zur Erzeugung des gewünschten Meßsignals abgebildet. Die Signalgewinnung erfolgt hier für sämtliche Probenbehälter parallel und simultan, so daß sich mit dieser Optikanordnung ein hoher Probendurchsatz realisieren läßt. Da das Meßsignal, beispielsweise das detektierte Fluoreszenzlicht, nahezu ausschließlich aus den Fokusvolumina der Einzellinsen des Linsenarrays stammt, ist mit dieser Optikanordnung ein sehr tiefenselektiver Fluoreszenznachweis möglich. Allerdings ist hier auch der laterale Querschnitt, also senkrecht zu den optischen Achsen der Linsen des Linsenarrays, des Detektionsvolumens sehr klein. Außerdem erfordert der Nachweis der Fluoreszenz oder eines anderen Meßsignals aus dem Bereich der Böden der Probenbehälter in der Praxis einen Tiefenscan, also mehrere Messungen mit unterschiedlichen Abständen zwischen der Mikrotiterplatte und der Optikanordnung in Richtung der optischen Achse, weil herstellungsbedingt die einzelnen Böden der Probenbehälter der Mikrotiterplatte unterschiedliche Höhen aufweisen. Der für einen Tiefenscan erforderliche Zeitaufwand steht jedoch im Widerspruch zu dem Ziel eines hohen Probendurchsatzes.

Aus der JP 7013101-A ist ein zeilenförmiges Abbildungssystem bekannt, hei dem ein Array von Dachkantprismen zwischen zwei Linsenarrays angeordnet ist. Die Linsenarrays weisen dabei auf der den Dachkantprismen zugewandten Seite jeweils eine zylindrische Linsenoberfläche auf. Die Dachkanlprismen bewirken dabei eine Seitenvertauschung der vom Gesamlsystem bewirkten Abbildung in Richtung der Achse der Zylinderlinsen.

Es ist das Ziel der vorliegenden Erfindung, ein Abbildungssystem zu schaffen, das Parallelmessungen in einer Vielzahl von Probenbehältern erlaubt. Die parallel gewonnenen Meßsignale sollen auch bei verschiedenen Bodenhöhen der Probenbehälter in allen Probenbehältern eine identische Empfindlichkeit aufweisen, eine Diskriminierung der aus dem bodennahen Bereich stammenden Meßsignale und einen hohen Probendurchsatz ermöglichen.

Dieses Ziel wird erfindungsgemäß durch ein Abbildungssystem mit den Merkmalen des Anspruches 1 gelöst. Vorteilhafte Ausgestaltungen der Erfindung ergeben sich aus den Merkmalen der abhängigen Ansprüche.

Das erfindungsgemäße Abbildungssystem weist demzufolge ein Array von Zylinderlinsen auf. Diesem Zylinderlinsenarray ist probenseitig ein Prismenarray vorgeschaltet, wobei das Prismenarray relativ zum Zylinderlinsenarray so orientiert ist, daß die prismatische Wirkung der Prismen in Richtung der Zylinderachsen der Zylinderlinsen liegt. Das Zylinderlinsenarray und das Prismenarray können dabei als zwei separate Bauteile oder als einziges Bauteil ausgebildet sein. Im letzteren Falle weist das kombinierte Array auf einem gemeinsamen Träger probenseitig eine Ausbildung als Prismenarray und auf der von der Probe abgewandten Seite die Zylinderlinsen auf.

Durch die Zylinderlinsen resultiert ein im wesentlichen zylindrisches Detektionsvolumen in jedem der Probenbehälter. Durch die den Zylinderlinsen probenseitig vorgeschalteten Prismen erhalten die Zylinderachsen der Fokusvolumina eine Neigung relativ zu den Zylinderachsen der Zylinderlinsen. Ist das Zylinderlinsenarray im wesentlichen parallel zu der Mikrotiterplatte angeordnet, resultieren daraus geneigt zu den Böden der Probenbehälter ausgerichtete zylindrische Detektionsvolumina. Da die Querschnittsflächen durch die Detektionsvolumina für parallele Schnitte durch diese Detektionsvolumina identisch sind, erfolgt der Nachweis des Meßsignals aus unterschiedlichen Tiefen des Probenvolumens mit identischer Empfindlichkeit. Demzufolge verursachen auch unterschiedliche Bodenhöhen in den verschiedenen Probenbehältern keine unterschiedlichen Meßempfindlichkeiten.

An dieser Stelle sei erwähnt, daß aus der US-A 5 602 679 bereits ein Abbildungssystem für die Projektion von Farb-LCD-Displays als abzubildendes Objekt bekannt ist, bei dem ein Linsenarray mit überlagerter prismatischer Wirkung eingesetzt wird. Als mögliche Linsenform des Linsenarrays werden dabei auch Zylinderlinsen angegeben. Auch wenn dort keinerlei konkrete Angaben gemacht werden, ist davon auszugehen, daß dort die prismatische Wirkung der Prismen senkrecht zu den Zylinderachsen der Zylinderlinsen orientiert sein muß, damit die gewünschte Überlagerung der Farbpixel erreicht wird. Außerdem liegt dort eine von der Aufgabenstellung der vorliegenden Erfindung völlig abweichende Aufgabenstellung zugrunde.

Das erfindungsgemäße Abbildungssystem wird vorzugsweise ähnlich wie das der eingangs genannten DE 197 48 211 A1 zusammen mit einem teleskopischen Abbildungssystem eingesetzt, wobei die langbrennweitige Linse des teleskopischen Abbildungssystems in Richtung auf das Zylinderlinsenarray orientiert ist und von seinem Durchmesser mehrere, vorzugsweise sämtliche Zylinderlinsen überdeckt. Dem Abbildungssystem oder dem teleskopischen Abbildungssystem ist dann weiterhin vorzugsweise ein Detektorarray nachgeschaltet, mit dem das Meßlicht für die verschiedenen parallelen Kanäle des Abbildungssystems parallel detektiert wird. Das Detektorarray ist dabei weiterhin vorzugsweise hinter der austrittsseitigen, der langbrennweitigen Teleskoplinse und dem Zylinderlinsenarray abgewandten Brennebene der vom Zylinderlinsenarry entfernten Teleskoplinse angeordnet. Bei einer derartigen Optikanordnung resultieren aus unterschiedlichen Höhen des Bodens der Mikrotiterplatte unterschiedliche laterale Verschiebungen der Intensitätsverteilung des Meßlichts auf dem Detektorarray. Da in der Regel das maximale Meßsignal, beispielsweise die maximale Fluoreszenzintensität aus dem Übergangsbereich vom Probenraumboden in die Lösung herrührt, läßt sich das aus diesem Bereich resultierende Meßsignal einfach dadurch vom übrigen Meßsignal diskriminieren, indem für die weitere Auswertung nur die Bereiche des Detektorarrays mit maximaler Signalstärke herangezogen werden. Auf diese Weise läßt sich schnell und einfach das aus dem Bodenbereich stammende Meßsignal gegenüber dem aus der Lösung stammenden Meßsignal diskriminieren.

Das erfindungsgemäße Abbildungssystem kann prinzipiell zusammen mit dem teleskopischen Abbildungssystem und dem Detektorarray zu einer einzigen Baueinheit zusammengefaßt sein. Besonders vorteilhaft ist jedoch ein modularer Aufbau, bei dem das Zylinderlinsenarray und das Prismenarray eine eigene Baueinheit bilden. Diese Baueinheit kann dann einfach gegen das Linsenarray aus der o.g. DE 197 48 211 A1 ausgetauscht werden, so daß die Funktionalität des dort beschriebenen Readers entsprechend ausgeweitet wird. Alternativ kann ein nach der vorliegenden Erfindung aufgebauter Reader durch einen modularen Aufbau einfach durch Austausch der probenseitigen Baugruppe mit dem Linsenarray und durch Einfügen bzw. Austausch eines Abstandsringes gegen eine Baueinheit mit einer Feldlinse zwischen den beiden Teleskoplinsen zu einem Reader nach der DE 197 48 211 A1 abgeändert werden.

Durch das teleskopische Abbildungssystem werden bei der vorliegenden Erfindung die Aperturen der Zylinderlinsen auf das Detektorarray abgebildet.

Zur Anregung von Fluoreszenz oder Lumineszenz sollte eine Auflichtbeleuchtung vorgesehen sein, die vorzugsweise zwischen dem Detektorarray und der kurzbrennweitigen Teleskoplinse in den Meßstrahlengang eingespiegelt wird.

Bei einem vollständigen Analyseautomaten mit einem optischen Abbildungssystem nach der Erfindung sollte ein Auswerterechner zur Auswertung der mit dem Detektorarray detektierten Lichtsignale vorgesehen sein. Dieser Auswerterechner kann eine Integration der zu jedem Probenbehälter zugehörigen Lichtsignale in der Richtung senkrecht zu den Zylinderachsen des Zylinderlinsenarrays durchführen und anschließend per Software lediglich den Maximalwert der integrierten Lichtintensität oder der anderweitigen charakteristischen Signaländerung in Richtung der Zylinderachsen der Zylinderlinsen bestimmen, um dadurch das aus den Bodenbereichen der Probenvolumina stammende Meßsignal zu diskriminieren.

Nachfolgend werden Einzelheiten der Erfindung anhand des in den Figuren dargestellten Ausführungsbeispiels näher erläutert. Dabei zeigen:
- Figur 1: eine Prinzipskizze des optischen Aufbaus eines Analysesystems mit einem Abbildungssystem nach der Erfindung,
- Figuren 2a und 2b: die Strahlengänge in dem Analysesystem in Figur 1 in zwei zueinander senkrechten Schnittrichtungen,
- Figur 3 a und 3b: Ausschnitte aus perspektivischen Darstellungen des Zylinderlinsenarrays (Figur 3a) und des Prismenarrays (Figur 3b),
- Figur 3c: einen Ausschnitt aus einem Array mit kombinierten Zylinderlinsen und Prismen im Schnitt;
- Figuren 4a und 4b: graphische Darstellungen zweier zylindrischer Fokusvolumina relativ zu zwei Probenraumböden bei unterschiedlichen Bodenhöhen;
- Figuren 5a und 5b: graphische Darstellungen der Intensitätsverteilungen auf dem Detektorarray bei den unterschiedlichen Bodenhöhen nach den Figuren 4a und 4b;
- Figur 6a: ein gegen das erfindungsgemäße Abbildungssystem bei Modulbauweise austauschbares Modul mit einem Linsenarray mit rotationssymmetrischen Linsen, und
- Figur 6b: ein bei Modulbauweise zusätzlich zwischen den Teleskoplinsen einsetzbares Modul mit einer Feldlinse.

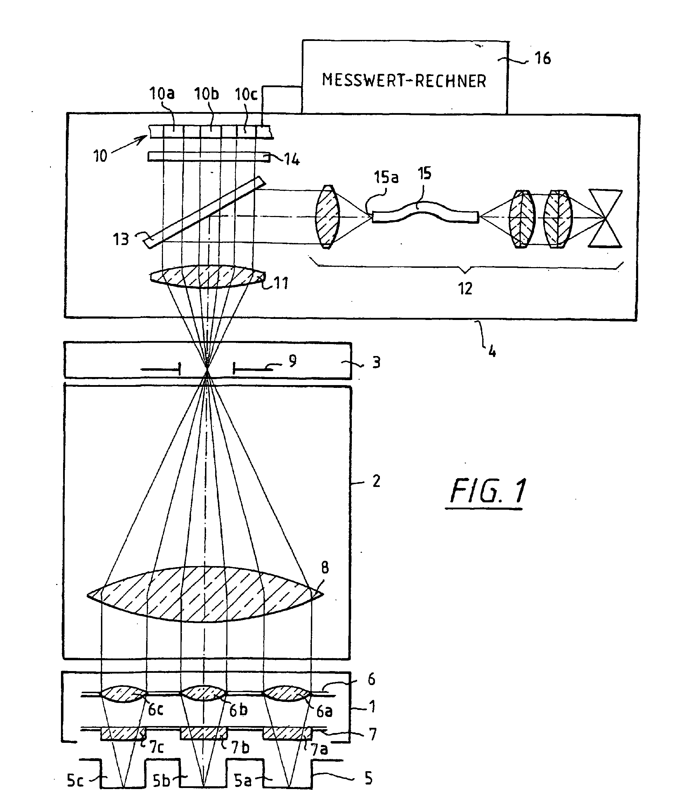

Das in der Figur 1 dargestellte Meß- und Auswertesystem besteht aus insgesamt vier Modulen (1 - 4), von denen drei optische Komponenten enthalten. Es dient zur Analyse, insbesondere zur Fluoreszenzanalyse der in Probenbehältern (5a - 5c) einer Mikrotiterplatte (5) befindlichen Proben, in der Regel auf den Böden der Probenbehälter (5a - 5c) liegender Zellen, die von einer Nährlösung umgeben sind.

Das der Mikrotiterplatte (5) am nächsten benachbarte Modul (1) enthält ein Linsenarray (6) mit einer Vielzahl Zylinderlinsen (6a - 6c) und ein Prismenarray (7) mit Prismen (7a - 7c). Das Prismenarray (7) ist dabei probenseitig des Zylinderlinsenarrays (6) angeordnet, so daß sich die Prismen (7a - 7c) zwischen den Zylinderlinsen (6a - 6c) und den Probenbehältern (5a - 5c) befinden. Das Prismenarray (7) bzw. die Prismen (7a - 7c) des Prismenarrays sind dabei relativ zum Zylinderlinsenarray (6) so orientiert, daß die prismatische Wirkung der Prismen in Richtung der Zylinderachsen der Zylinderlinsen (6a - 6c) liegt.

Auf der von der Mikrotiterplatte (5) abgewandten Seite des Moduls (1) schließt sich ein Modul (2) an, das eine langbrennweitige Teleskoplinse (8) enthält. Der Öffnungsdurchmesser, genauer gesagt die nutzbare Apertur der langbrennweitigen Teleskoplinse (8) ist dabei so gewählt, daß diese Apertur die Fläche sämtlicher Aperturen der Zylinderlinsen (6a - 6c) des Zylinderlinsenarrays überdeckt. An dieser Stelle sei darauf hingewiesen, daß in der Figur 1 und den übrigen Figuren jeweils nur ein kleiner Ausschnitt der Mikrotiterplatte (5) mit drei Probenbehältern aus Gründen der Übersichtlichkeit dargestellt ist. In der Realität sind 96 oder ganzzahlige Vielfache davon, 384 oder 1536 entsprechende Probenbehälter vorhanden und entsprechend ist die Anzahl der Optikkanäle, die durch die Anzahl der Mikrolinsen (6a - 6c) und der Prismen (7a - 7c) bestimmt ist. Dementsprechend überdeckt die Apertur der langbrennweitigen Teleskoplinse (8) sämtliche Optikkanäle.

Auf das die langbrennweitige Teleskoplinse (8) enthaltende Modul (2) folgt im Bereich der Brennebene der langbrennweitigen Teleskoplinse (8) ein Zwischenmodul (3), das primär als Abstandshalter dient und mit Ausnahme einer Blende (9) keinerlei Optik enthält. Die Blende (9) bildet dabei in Richtung der Zylinderachsen der Zylinderlinsen (6a - 6c), die in der Figur 1 senkrecht zur Zeichenebene stehen, eine Aperturblende. In der dazu senkrechten Richtung, also in der Zeichenebene der Figur 1, bildet die Blende (9) eine Feldblende. In dieser Richtung bewirkt die Blende (9), daß Meßlicht, beispielsweise Fluoreszenzlicht, von den seitlichen Rändern der Probenbehälter (5a - 5c) durch die Blende (9) vom Detektorarray (10) abgeschirmt wird.

Auf das Zwischenmodul (3) folgt schließlich das Beleuchtung- und Detektormodul (4). Es enthält eine kurzbrennweitige Teleskoplinse (11), die gemeinsam mit der langbrennweitigen Teleskoplinse (8) ein afokales System bildet, das Detektorarray (10), die Auflichtbeleuchtung (12) sowie einen zwischen der kurzbrennweitigen Teleskoplinse (41) und dem Detektorarray (10) angeordneten Auflichtreflektor (13). Zwischen dem Auflichtreflektor (13) und dem Detektorarray (10) ist noch ein Fluoreszenzfilter (14) mit hoher Transmission im Wellenlängenbereich des Fluoreszenz- bzw. Lumineszenzlichtes und geringer Transmission im Wellenlängenbereich des Anregungslichtes der Auflichtbeleuchtung (12) angeordnet. Alternativ dazu kann der Auflichtreflektor auch als entsprechender dichroitischer Strahlteiler ausgebildet sein.

Die Auflichtbeleuchtung (12) erzeugt einen kollimierten Beleuchtungsstrahlengang, dessen Durchmesser der Apertur der kurzbrennweitigen Teleskopflinse (11) entspricht. Dieses Beleuchtungsstrahlenbündel wird durch das durch die Linsen (8 und 11) gebildete Teleskop auf die Apertur der langbrennweitigen Teleskoplinse (8) aufgeweitet und leuchtet dementsprechend sämtliche Aperturen der Zylinderlinsen (6a) des Zylinderlinsenarrays (6) aus. Durch die Zylinderlinsen (6a - 6c) erfolgt dann eine Fokussierung des Anregungslichtes in der Richtung senkrecht zu den Zylinderachsen der Zylinderlinsen (6a - 6c), also in der Zeichenebene der Figur 1. In der dazu senkrechten Richtung bleibt das Anregungslicht dagegen kollimiert, wobei durch die prismatische Wirkung der Prismen (7a - 7c) eine Ablenkung erfolgt, so daß in der Nähe der Böden der Probenbehälter (5a - 5c) eine Anzahl Strichfoki entstehen, die zu den Böden der Probenbehälter (5a - 5c) geneigt sind. Die Breite der Strichfoki ist dabei durch die lateralen Abmessungen der effektiv wirkenden Lichtquelle, der Austrittsfläche (15a) einer Lichtleitfaser (15) in der Auflichtbeleuchtung (12) bestimmt. Die Dimensionen dieser effektiv wirkenden Lichtquelle sind dabei so gewählt, daß in den Probenbehältern (5a - 5c) ein hinreichend großes Fokusvolumen und damit Anregungsvolumen entsteht.

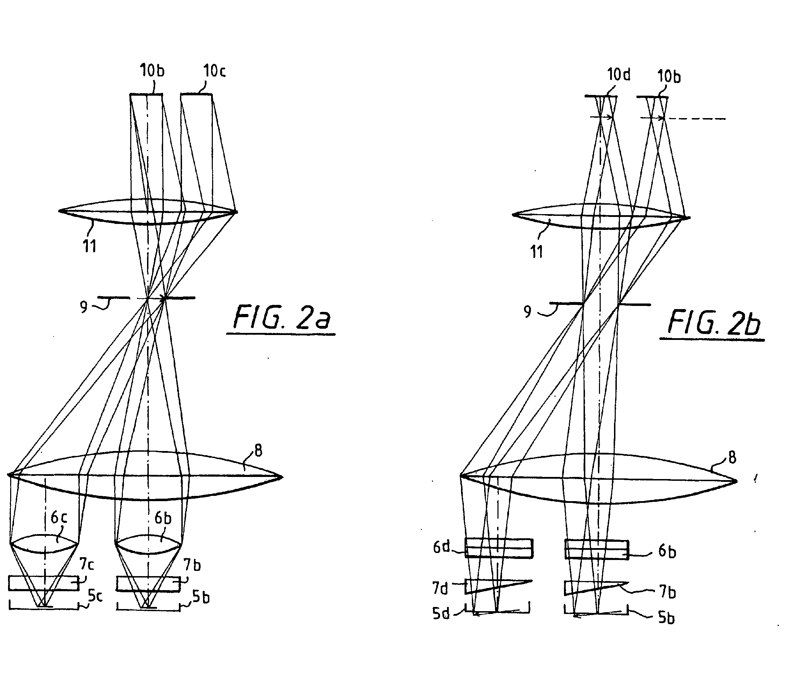

Die abbildungsseitigen Übertragungsverhältnisse sind für die beiden zueinander senkrechten Richtungen in den Figuren 2a und 2b dargestellt. Die Zeichenebene in Figur 2a entspricht dabei der Zeichenebene in Figur 1. Für die Abbildungsverhältnisse in dieser Richtung spielt das Prismenarray (7) keine Rolle, da die prismatische Wirkung der Prismen (7b, 7c) in der hierzu senkrechten Richtung liegt. Da die Zylinderlinsen (6b, 6c) in dieser Richtung Wirkung haben, wird in den Probenbehältern (5b, 5c) im Fokusvolumen der Zylinderlinsen (6b, 6c) entstehende Fluoreszenzstrahlung von den Zylinderlinsen (6b, 6c) mit hoher Apertur aufgesammelt und von der langbrennweitigen Teleskoplinse (8) in die Fokusebene dieser langbrennweitigen Teleskoplinse (8), und damit in die Ebene der Blende (9) abgebildet. Hier entstehen überlagerte astigmatische Zwischenbilder, die nachfolgend von der kurzbrennweitigen Teleskoplinse (11) nach unendlich abgebildet werden. Nachfolgend wird das Fluoreszenzlicht von getrennten Bereichen (10b, 10c) des Detektorarrays (10) detektiert. Dabei werden die Pupillen der Zylinderlinsen (6b, 6c) von dem durch die beiden Linsen (8, 11) gebildeten Teleskop in die Ebene des Detektorarrays auf getrennte Bereiche des Detektorarrays (10b, 10c) abgebildet.

In der Richtung der Zylinderachsen der Zylinderlinsen (6b) (Figur 2b) haben dagegen die Zylinderlinsen keine Wirkung. In dieser Richtung haben allerdings die Prismen (7b, 7d) des Prismenarrays (7) eine prismatische Wirkung. In dieser Richtung wirkt die langbrennweitige Teleskoplinse (8) als Objektiv, das das Fluoreszenzlicht mit relativ kleiner Apertur aus den Probenbehältern (5b, 5d) ausammelt. Durch die prismatische Wirkung der Prismen (7b, 7d) erfolgt zusätzlich eine Ablenkung, so daß in dieser Richtung die Foki der einzelnen Kanäle geneigt zur Fokusebene der langbrennweitigen Zylinderlinse (8) und damit geneigt zu den Böden der Probenbehälter (5b, 5d) liegen. Die Probenbehälter (5b, 5d), also die Mikrotiterplatte ist dabei mit den Böden der Probenbehälter in der Fokusebene der langbrennweitigen Teleskoplinse (8) angeordnet. Das von der langbrennweitigen Teleskoplinse (8) aufgesammelte Fluoreszenzlicht wird von dieser kollimiert, so daß in dieser Richtung die Blende (9) als Aperturblende wirkt. In der hinteren Brennebene der kurzbrennweitigen Teleskoplinse (11) entstehen Zwischenbilder der Foki der langbrennweitigen Teleskoplinse (8). Das Detektorarray mit den Bereichen (10b, 10d) ist geringfügig hinter dieser Fokusebene angeordnet.

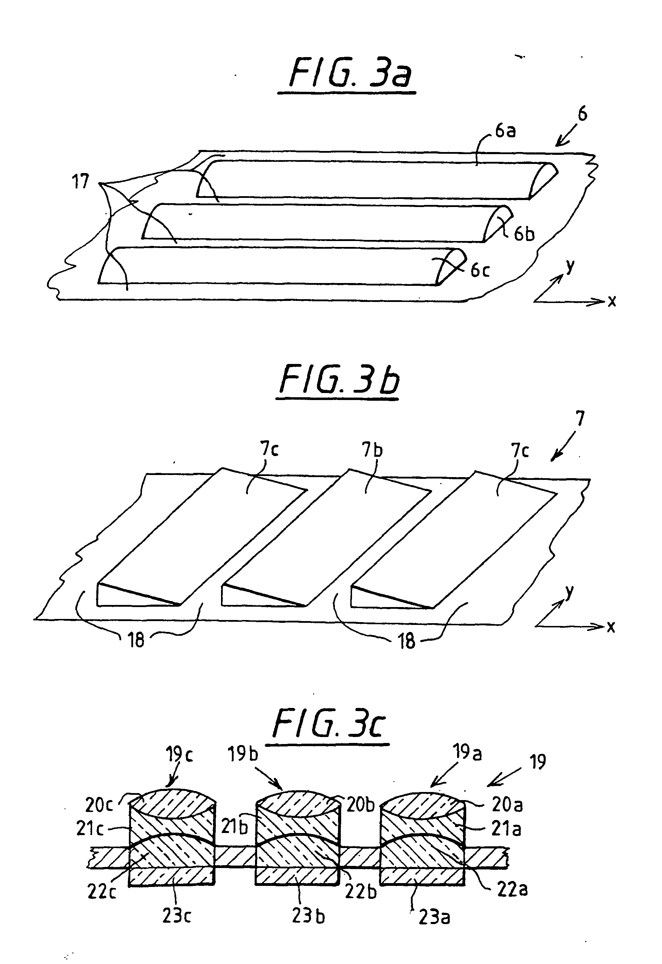

Der Aufbau des Zylinderlinsenarrays (6) ist in der Figur 3a als Ausschnitt aus dem Zylinderlinsenarray (6) dargestellt. Das Zylinderlinsenarray enthält eine Vielzahl parallel zueinander angeordneter Zylinderlinsen (6a, 6b, 6c), die sich in Richtung der Zylinderachsen jeweils über die gesamte Länge des Arrays in dieser Richtung erstrecken können. Die Bereiche (17) zwischen den Zylinderlinsen sind zur Kanaltrennung vorzugsweise opak ausgebildet. In der Figur 3b ist ein entsprechender Ausschnitt des Prismenarrays (7) perspektivisch dargestellt. Es enthält eine streifenförmige Anordnung von Prismen (7a, 7b, 7c) mit jeweils prismatischer Wirkung in Richtung der Zylinderachsen der Zylinderlinsen (6a, 6b, 6c). Mit anderen Worten, jedes Prisma (7a, 7b, 7c) weist eine in Richtung der Zylinderachsen zunehmende bzw. abnehmende Dicke auf. In der Richtung senkrecht zu den Zylinderachsen der Zylinderlinsen (6a, 6b, 6c) können sich die Prismen (7a, 7b, 7c) über die gesamte Länge des Prismenarrays (7) erstrecken. Die Bereiche (18) zwischen den Prismen (7a, 7b, 7c) sind zur Kanaltrennung wiederum opak ausgebildet.

Durch Überlagerung des Zylinderlinsenarrays (6) und des Prismenarrays (7) und die opake Ausbildung der Zwischenräume (17, 18) zwischen den Zylinderlinsen bzw. zwischen den Prismen entsteht ein zweidimensionales Array optischer Kanäle, dessen Anzahl dem Produkt aus der Anzahl der Zylinderlinsen und der Anzahl der Prismen entspricht.

Alternativ zu der Ausbildung nach den Figuren 3a und 3b ist es jedoch auch denkbar, zu jedem Optikkanal ein eigenes Prisma auf dem Prismenarray und eine eigene Zylinderlinse auf dem Zylinderlinsenarray vorzusehen. In diesem Fall sind sowohl das Zylinderlinsenarray als auch das Prismenarray jeweils als zweidimensionales Array ausgebildet. Durch eine entsprechende opake Ausbildung der Zwischenräume ergibt sich eine geringfügig verbesserte Kanaltrennung, d.h. ein Übersprechen zwischen den Optikkanälen wird reduziert.

In der Figur 3c ist der Schnitt durch ein kombiniertes Zylinderlinsen- und Prismenarray (19) dargestellt, das über einen erweiterten Spektralbereich achromatisch ist. Es enthält auf einem gemeinsamen Träger für jeden Optikkanal eine Zylinderlinsen-Prismenkombination (19a, 19b, 19c) aus jeweils drei Linsen (20a - 20c, 21a - 21c, 22a - 22c) und den Linsen nachgeschaltete Prismen (23a - 23c). In an sich bekannter Weise bestehen die einzelnen Komponenten jedes Zylinderlinsensystems aus unterschiedlichen Materialien, wodurch eine achromatische Korrektur für einen Wellenlängenbereich von 350nm - 700nm erreicht wird. Die Prismen (23a, 23b, 23c) weisen wiederum senkrecht zur Zeichenebene in Figur 3 und damit in Richtung der Zylinderachsen der Zylinderlinsen unterschiedliche Dicke auf, woraus die prismatische Wirkung resultiert.

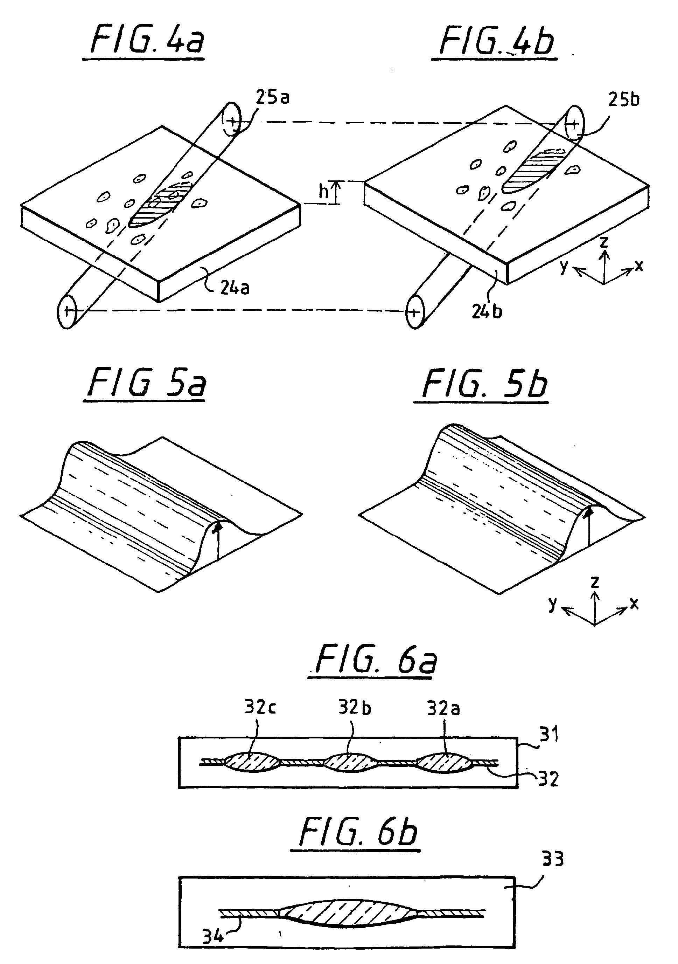

Die bei der oben beschriebenen Anordnung erzielte Wirkung im Bereich des Probenraumbodens ist anhand der Figuren 4a und 4b erkennbar. Dort sind die Probenraumböden (24a, 24b) für zwei exemplarische benachbarte Zellen der Mikrotiterplatte dargestellt. Dabei sei angenommen, daß die beiden Probenraumböden um eine kleine Strecke (h) gegeneinander versetzt sind. Die Fokusvolumina der betreffenden Optikkanäle in den beiden Probenräumen sind mit (25a, 25b) bezeichnet. Diese Fokusvolumina sind Kreiszylinder, deren Zylinderachse zu den Ebenen der Probenraumböden geneigt ist. Die Neigung zwischen der Ebene der Probenraumböden und den Zylinderachsen der Fokusvolumina (25a, 25b) ist dabei durch die prismatische Wirkung der Prismen bestimmt. Der Durchmesser der zylindrischen Fokusvolumina ist im wesentlichen durch die numerische Apertur der Gesamtanordnung bestimmt, wobei hier primär die numerische Apertur der Zylinderlinsen maßgeblich ist. Numerische Aperturen in dieser Richtung von 0,5 oder größer sind dabei problemlos erreichbar.

Wie man anhand eines Vergleichs der Figuren 4a und 4b erkennt, resultiert aufgrund der zur Ebene der Probenraumböden geneigten Fokusvolumina aus unterschiedlichen Bodenhöhen in den unterschiedlichen Zellen der Mikrotiterplatte eine laterale Verschiebung der betreffenden Schnittebene zwischen dem zylindrischen Fokusvolumen und der Oberfläche des Probenraumbodens. Die daraus resultierenden unterschiedlichen Intensitätsverteilungen der Fluoreszenzstrahlung in den Bereichen (10a - 10c) auf dem Detektorarray sind in den Figuren 5a und 5b entsprechend dargestellt. Durch den Versatz der Schnittebene zwischen Fokusvolumen und Probenraumboden ergibt sich ein entsprechender Versatz der Intensitätsverteilung in Richtung der Zylinderachsen des Zylinderlinsenarrays, da die Fluoreszenzintensität in der Regel in unmittelbarer Nähe des Probenraumbodens maximal ist. Zur Signalauswertung werden in einem Auswerterechner (16) zunächst die Intensitätssignale der zu jedem Probenraum bzw. jedem Optikkanal zugehörigen Pixel des Detektorarrays in Richtung senkrecht zu den Zylinderachsen der Zylinderlinsen integriert und nachfolgend softwaremäßig die charakteristische Signaländerung in Richtung der Zylinderachsen, in der Regel das Maximum, der intergrierten Fluoreszenzintensität bestimmt und ausgewertet. Bei Messungen der Reaktionskinetik oder des zeitlichen Verlaufs des Fluoreszenzsignals erfolgt die Fluoreszenzmessung wiederholt über eine Vielzahl von Aufnahme- und Auslesezyklen des Detektorarrays.

Als zweckmäßig hat es sich erwiesen, die Prismen des Prismenarrays so zu dimensionieren, daß die zylindrischen Fokusvolumina (25a, 25b) in Richtung der optischen Achse der Gesamtanordnung einen Bereich von 0,3 - 0,5mm abdecken. Die Länge des zylindrischen Fokusvolumens erstreckt sich vorzugsweise über die gesamte entsprechende Länge des Probenraumes, die bei einer 384er Mikrotiterplatte ca. 3mm entspricht. Durch die Neigung des zylindrischen Fokusvolumens resultiert dann eine im wesentlichen elliptische Schnittfläche zwischen Probenraumboden und Fokusvolumen, deren große Achse etwa 1mm und deren kleine Achse etwa 0,13mm beträgt.

In der Figur 6a ist ein Austauschmodul bzw. Ergänzungsmodul (31) zum Austausch gegen das Modul (1) bei der Anordnung nach Figur 1 dargestellt. Das Austauschmodul (31) enthält ein Linsenarray (32) mit rotationssymmetrischen Linsen (32a - 32c). Ein weiteres Austauschmodul (33) (Figur 6b) zum Austausch gegen das Modul (3) enthält eine Feldlinse (34). Durch Austausch der Module (1)und (3) in Figur 1 gegen die Module (31) und (33) resultiert eine Optikanordnung, die der Optik nach der eingangs genannten DE 197 48 211 A1 entspricht. Durch entsprechende Zusatzmodule ist daher eine Kompatibilität zu der in der älteren Anmeldung beschriebenen Optikanordnung gewährleistet.

## Patentansprüche

1. Abbildungssystem mit einem Array (6) von Zylinderlinsen (6a, 6b, 6c) und einem mit dem Array von Zylinderlinsen kombinierten oder diesem vorgeschalteten Prismenarray (7), wobei die Prismen des Prismenarrays (7) in Richtung der Zylinderachsen der Zylinderlinsen (6a, 6b, 6c) eine zunehmende oder abnehmende Dicke aufweisen, woraus eine prismatische Wirkung der Prismen (7a, 7b, 7c) in Richtung der Zylinderachsen der Zylinderlinsen (6a, 6b, 6c) resultiert, so dass die Zylinderachsen der im wesentlichen zylindrischen Fokusvolumina der Zylinderlinsen eine Neigung relativ zu den Zylinderachsen der Zylinderlinsen erhalten.

2. Abbildungssystem nach Anspruch 1, wobei ein Detektorarray (10) und ein teleskopisches Abbildungssystem vorgesehen ist, wobei das teleskopische Abbildungssystem zwischen dem Array (6) von Zylinderlinsen (6a, 6b, 6c) und dem Detektorarray (10) und wobei das Prismenarray (7) auf der vom teleskopischen Abbildungssystem abgewandten Seite des Arrays (6) von Zylinderlinsen (6a, 6b, 6c) angeordnet ist.

3. Abbildungssystem nach Anspruch 2, wobei das teleskopische Abbildungssystem eine langbrennweitige Linse (8) und eine kurzbrennweitige Linse (11) aufweist und wobei die langbrennweitige Linse (8) des teleskopischen Abbildungssystems benachbart zu dem Array (6) von Zylinderlinsen (6a, 6b, 6c) angeordnet ist und von ihrem Durchmesser mehrere Zylinderlinsen (6a, 6b, 6c) überdeckt.

4. Abbildungssystem nach Anspruch 2 oder 3, wobei das Detektorarray (10) hinter der austrittsseitigen Brennebene der vom Zylinderlinsenarray (6) entfernten kurzbrennweitigen Teleskoplinse (11) angeordnet ist.

5. Abbildungssystem nach einem der Ansprüche 2 - 4, wobei durch das teleskopische Abbildungssystem (8, 11) die Aperturen der Zylinderlinsen (6a, 6b, 6c) auf das Detektorarray (10) abgebildet sind.

6. Abbildungssystem nach einem der Ansprüche 1 - 5, wobei das Zylinderlinsenarray (6) und/oder das Prismenarray (7) streifenförmig sind.

7. Abbildungssystem nach einem der Ansprüche 3 - 6, wobei eine Auflichtbeleuchtung (12) vorgesehen ist, die zwischen dem Detektorarray (10) und der kurzbrennweitigen Linse des teleskopischen Abbildungsystems in den zum Array (6) von Zylinderlinsen (6a, 6b, 6c) führenden Strahlengang eingespiegelt ist.

8. Analyseautomat mit einem optischen Abbildungssystem nach einem der Ansprüche 2 - 7, wobei ein Auswerterechner (16) zur Auswertung der mit dem Detektorarray (10) detektierten Lichtsignale vorgesehen ist.

9. Abbildungssystem nach Anspruch 1, wobei dieses einen modularen Aufbau aufweist und folgende Baueinheiten enthält:
- eine erste Baueinheit (1) mit einem Array von Zylinderlinsen und einem mit dem Array von Zylinderlinsen kombinierten oder diesem vorgeschalteten Prismenarray, wobei die Prismen des Prismenarrays (7) in Richtung der Zylinderachsen der Zylinderlinsen (6a, 6b, 6c) eine zunehmende oder abnehmende Dicke aufweisen, woraus eine prismatische Wirkung der Prismen (7a, 7b, 7c) in Richtung der Zylinderachsen der Zylinderlinsen (6a, 6b, 6c) resultiert,
- eine zweite Baueinheit mit einer langbrennweitigen Optik (8), deren freier nutzbarer Öffnungsdurchmesser den Durchmesser des Zylinderlinsenarrays (6) überdeckt,
- eine dritte Baueinheit (4) mit einer kurzbrennweitigen Optik (11), die gemeinsam mit der langbrennweitigen Optik (8) der zweiten Baueinheit ein afokales System bildet, und
- eine vierte Baueinheit (3) ohne abbildende Optik, wie zwischen der zweiten Baueinheit (2) und der dritten Baueinheit (4) angeordnet werden kann.

10. Abbildungssystem nach Anspruch 9, wobei zwei weitere Baueinheiten (31, 33) vorgesehen ist, von denen die eine ein Array (32) mit rotationssymetrischen Einzellinsen (32a - 32c) zum Austausch gegen die erste Baueinheit (1) und die zweite zusätzliche Baueinheit (33) eine Feldlinse (34) aufweist und gegen die vierte Baueinheit austauschbar ist.

## Claims

1. Imaging system with an array (6) of cylindrical lenses (6a, 6b, 6c) and a prism array (7) which is combined with the array of cylindrical lenses or placed upstream thereof, in which the prisms of the prism array (7) have an increasing or decreasing thickness in the direction of the cylinder axes of the cylindrical lenses (6a, 6b, 6c), the result of which is a prismatic action of the prisms (7a, 7b, 7c) in the direction of the cylinder axes of the cylindrical lenses (6a, 6b, 6c) such that the cylinder axes of the substantially cylindrical focus volumes of the cylindrical lenses acquire an inclination relative to the cylinder axes of the cylindrical lenses.

2. Imaging system according to Claim 1, in which a detector array (10) and a telescopic imaging system are provided, the telescopic imaging system being arranged between the array (6) of cylindrical lenses (6a, 6b, 6c) and the detector array (10), and the prism array (7) being arranged on that side of the array (6) of cylindrical lenses (6a, 6b, 6c) which is averted from the telescopic imaging system.

3. Imaging system according to Claim 2, in which the telescopic imaging system has a long focal length lens (8) and a short focal length lens (11), and in which the long focal length lens (8) of the telescopic imaging system is arranged adjacent to the array (6) of cylindrical lenses (6a, 6b, 6c) and covers a number of cylindrical lenses (6a, 6b, 6c) with its diameter.

4. Imaging system according to Claim 2 or 3, in which the detector array (10) is arranged downstream of the exit-side focal plane of the short focal length telescope lens (11) remote from the cylindrical lens array (6).

5. Imaging system according to one of Claims 2-4, in which the apertures of the cylindrical lenses (6a, 6b, 6c) are imaged onto the detector array (10) by the telescopic imaging system (8, 11).

6. Imaging system according to one of Claims 1-5, in which the cylindrical lens array (6) and/or the prism array (7) are strip-shaped.

7. Imaging system according to one of Claims 3-6, in which a reflected light illumination (12) is provided which is reflected between the detector array (10) and the short focal length lens of the telescopic imaging system into the beam path leading to the array (6) of cylindrical lenses (6a, 6b, 6c).

8. Automatic analyser with an optical imaging system according to one of Claims 2-7, in which an evaluation computer (16) is provided for evaluating the light signals detected by the detector array (10).

9. Imaging system according to Claim 1, in which the latter has a modular design and includes the following subassemblies:
- a first subassembly (1) with an array of cylindrical lenses and a prism array which is combined with the array of cylindrical lenses or placed upstream thereof, in which the prisms of the prism array (7) have an increasing or decreasing thickness in the direction of the cylinder axes of the cylindrical lenses (6a, 6b, 6c), the result of which is a prismatic action of the prisms (7a, 7b, 7c) in the direction of the cylinder axes of the cylindrical lenses (6a, 6b, 6c),
- a second subassembly with a long focal length optics (8) whose free effective opening diameter covers the diameter of the cylindrical lens array (6),
- a third subassembly (4) with a short focal length optics (11) which forms an afocal system together with the long focal length optics (8) of the second subassembly, and
- a fourth subassembly (3) without imaging optics such as can be arranged between the second subassembly (2) and the third subassembly (4).

10. Imaging system according to Claim 9, in which two further subassemblies (31, 33) are provided of which one has an array (32) with rotationary symmetrical individual lenses (32a-32c) for exchanging against the first subassembly (1), and the second additional subassembly (33) has a field lens (34) and can be exchanged against the fourth subassembly.

## Revendications

1. Système d'imagerie avec un ensemble (6) de lentilles cylindriques (6a, 6b, 6c) et un ensemble de prismes (7) combiné avec ledit ensemble de lentilles cylindriques ou placé en amont de celui-ci, les prismes de l'ensemble de prismes (7) présentant en direction des axes de cylindre des lentilles cylindriques (6a, 6b, 6c) une épaisseur croissante ou décroissante, d'où résulte un effet prismatique des prismes (7a, 7b, 7c) en direction des axes de cylindre des lentilles cylindriques (6a, 6b, 6c), de sorte que les axes de cylindre des volumes focaux substantiellement cylindriques des lentilles cylindriques reçoivent une inclinaison par rapport aux axes de cylindre des lentilles cylindriques.

2. Système d'imagerie selon la revendication 1, dans lequel un ensemble de détecteurs (10) et un système d'imagerie télescopique sont prévus, dans lequel le système d'imagerie télescopique est disposé entre l'ensemble (6) des lentilles cylindriques (6a, 6b, 6c) et l'ensemble de détecteurs (10), et dans lequel l'ensemble de prismes (7) est disposé du côté détourné du système d'imagerie télescopique de l'ensemble (6) de lentilles cylindriques (6a, 6b, 6c).

3. Système d'imagerie selon la revendication 2, dans lequel le système d'imagerie télescopique présente une lentille à longue distance focale (8) et une lentille à courte distance focale (11), et dans lequel la lentille à longue distance focale (8) du système d'imagerie télescopique est disposée à proximité de l'ensemble (6) de lentilles cylindriques (6a, 6b, 6c) et recouvre de son diamètre plusieurs lentilles cylindriques (6a, 6b, 6c).

4. Système d'imagerie selon la revendication 2 ou 3, dans lequel l'ensemble de détecteurs (10) est disposé derrière le plan focal côté sortie de la lentille télescopique à courte distance focale (11), éloignée de l'ensemble de lentilles cylindriques (6).

5. Système d'imagerie selon l'une quelconque des revendications 2 à 4, dans lequel le système d'imagerie télescopique (8, 11) reproduit les ouvertures des lentilles cylindriques (6a, 6b, 6c) sur l'ensemble de détecteurs (10).

6. Système d'imagerie selon l'une quelconque des revendications 1 à 5, dans lequel l'ensemble de lentilles cylindriques (6) et/ou l'ensemble de prismes (7) se présente(nt) sous forme de bande.

7. Système d'imagerie selon l'une quelconque des revendications 3 à 6, dans lequel un éclairage en lumière réfléchie (12) est prévu qui est réfléchi entre l'ensemble de détecteurs (10) et la lentille à courte longueur focale du système d'imagerie télescopique dans la trajectoire des rayons menant à l'ensemble (6) de lentilles cylindriques (6a, 6b, 6c).

8. Dispositif d'analyse automatique, comprenant un système d'imagerie optique selon l'une quelconque des revendications 2 à 7, dans lequel un ordinateur d'évaluation (16) pour évaluer les signaux lumineux détectés dans l'ensemble de détecteurs (10) est prévu.

9. Système d'imagerie selon la revendication 1, dans lequel celui-ci présente une construction modulaire et comprend les unités modulaires suivantes :
- une première unité modulaire (1) avec un ensemble de lentilles cylindriques et un ensemble de prismes combiné avec l'ensemble de lentilles cylindriques ou placé en amont de celui-ci, dans lequel les prismes de l'ensemble de prismes (7) présentent en direction des axes de cylindre des lentilles cylindriques (6a, 6b, 6c) une épaisseur croissante ou décroissante, d'où résulte un effet prismatique des prismes (7a, 7b, 7c) en direction des axes de cylindre des lentilles cylindriques (6a, 6b, 6c),
- une deuxième unité modulaire avec un objectif à longue distance focale (8), dont le diamètre d'ouverture utilisable libre recouvre le diamètre de l'ensemble de lentilles cylindriques (6),
- une troisième unité modulaire (4) avec un objectif à courte distance focale (11), qui forme en conjonction avec l'objectif à longue distance focale (8) de la deuxième unité modulaire un système afocal, et
- une quatrième unité modulaire (3) sans objectif imageur, qui peut être disposée entre la deuxième unité modulaire (2) et la troisième unité modulaire (4).

10. Système d'imagerie selon la revendication 9, dans lequel deux autres unités modulaires (31, 33) sont prévues, dont l'une présente un ensemble (32) avec des lentilles individuelles à symétrie de révolution (32a à 32c) pour remplacer la première unité modulaire (1), et la deuxième unité modulaire supplémentaire (33) présente une lentille de champ (34) et peut remplacer la quatrième unité modulaire.
